# EUROPEAN PATENT SPECIFICATION

(11) **EP 0 547 879 B1**
(45) Date of publication and mention of the grant of the patent: **26.02.1997**
(21) Application number: 92311480.5
(22) Date of filing: 16.12.1992
(51) Int. Cl.: G01D 4/00, G01D 5/36, G01R 11/24

(54) **Meter output devices**
Messausgabegerät
Appareil de sortie d'un dispositif de mesure

(30) Priority: 17.12.1991 GB 9126720
(43) Date of publication of application: 23.06.1993
(73) Proprietor: SCHLUMBERGER INDUSTRIES LIMITED, Farnborough Hampshire, GU14 7PW (GB)
(72) Inventor: Samuel, Nicholas Peter, Swinton, Salford M27 1EA (GB); Hart, Roger Ernest, Rudheath, Northwich, Cheshire CW9 7EG (GB)
(74) Representative: Stoole, Brian David

(56) References cited:
- EP-A- 0 380 794
- GB-A- 2 093 615
- US-A- 4 650 332
- SIEMENS COMPONENTS vol. 24, no. 4, August 1989, BERLIN,DE pages 143 - 147 , XP000054519 GOEPEL ET AL. 'SFH910-Low -Cost Photo Interrupter'

## Description

This invention relates to meter output devices, and is more particularly but not exclusively concerned with output devices which can be retrofitted to commodity meters such as gas meters to provide the meters with a pulsed electrical output. Such an electrical output can be required, for example, either to drive a remote indicator device, or for use in a remote meter reading system of the kind involving a radio transmitter for transmitting the meter reading to a remote location.

It has already been proposed to provide a meter output device which can be retrofitted to a meter by securing it to the front of the indicator mechanism of the meter, and which comprises a light emitting device arranged to direct a beam of light at a rotating pointer driven by the meter. As the pointer rotates, it periodically modulates the beam, and the modulated beam is reflected back to the output device, where it is detected by suitable detector means. Such a meter output device, in which the detector means comprises a pair of phototransistors, is disclosed in EP A 0380794.

However, such an output device suffers from a number of disadvantages. In particular, the degree of modulation of the light beam by the pointer is very slight, which makes detection of the modulation rather difficult. And this, coupled with the fact that the output of the detector is significantly affected by temperature and by aging of the light emitting device and of the photodetector, as well as by changes in ambient lighting and by slight variations in the indicator mechanism due to manufacturing tolerances, makes obtaining a reliable output signal even more difficult. Additionally, the correct operation of the device can be deliberately interfered with by directing a bright pulsed or continuous light at the indicator mechanism of the meter.

It is therefore an object of the present invention to provide a meter output device in which at least some of the aforementioned disadvantages are considerably alleviated.

According to the present invention, there is provided an output device for a commodity meter of the kind having a rotary indicator member which rotates in dependence upon the amount of the commodity metered by the meter, the device comprising a housing adapted to be secured to the meter and containing a light emitting device arranged to direct a light beam towards the indicator member for modulation by the indicator member as it rotates and reflection back into the device, detector means for detecting the reflected light beam, the detector means comprising a pair of matched semiconductor photodetectors positioned such that when the indicator member is modulating the portion of the beam incident on the first photodetector, it is not modulating the portion of the beam incident on the second photodetector to the same extent, and means for producing an output signal representative of the difference between the respective outputs of the photodetectors, whereby the beam is modulated with a predetermined periodic signal, characterised in that the output signal producing means includes a sample-and-hold circuit arranged to sample the difference between the respective outputs of the photodetectors in synchronism with said predetermined periodic signal.

Thus in the output device of the invention, temperature and aging of the light emitting device and of the photodetectors tend to affect both photodetector outputs equally, as do ambient light, changes and slight variations in the position of the indicator member due to manufacturing tolerances. As a result, the effects of all these factors tend to cancel out when the output signal is formed from the difference between the photodetector outputs.

Conveniently, the photodetectors are disposed such that the modulation produced by the indicator member affects them in close succession (although it is not absolutely necessary for the indicator member to modulate the portion of the beam incident on the second photodetector at all).

In a preferred embodiment of the invention, both photodetectors are formed on a common substrate, while the light emitting device may conveniently be a light emitting diode.

Advantageously, the light beam is an infra-red light beam (and the term "light" as used herein is to be understood to include infra-red light, and not restricted solely to visible light), and the photodetectors are preferentially sensitive to infra-red light.

The invention also includes a commodity meter provided with an output device in accordance with any of the preceding statements of invention.

Typically, the indicator member of the meter is a relatively less reflective or more light-scattering rotary pointer, eg in red or black, forming part of a clear plastic or glass fronted indicator mechanism of the meter, this pointer rotating in front of a relatively more reflective or less light-scattering dial face or background, eg in white, although the reflectivity of the region of the dial face which actually reflects the beam can advantageously be increased in relation to the rest of the dial face or background if desired.

Where the output device operates with infra-red light, the transparent front of the indicator mechanism is preferably provided with an infra-red blocking filter, ie a filter which substantially reduces the transmission of infra-red light, over the entire surface thereof except for the portion to which the output device is secured.

The invention will now be described, by way of example only, with reference to the accompanying drawings, of which:
Figure 1 shows, somewhat schematically, a gas meter having an output device in accordance with the present invention secured to it;
Figure 2 is a somewhat diagrammatic sectional view of the part of the meter to which the device of Figure 1 is attached, showing the device in its operative position;
Figure 3 is a much simplified circuit diagram of a circuit useful for explaining the operation of the device of Figures 1 and 2; and
Figure 4 is a more detailed schematic block diagram of the circuit actually used in the device of Figures 1 and 2.

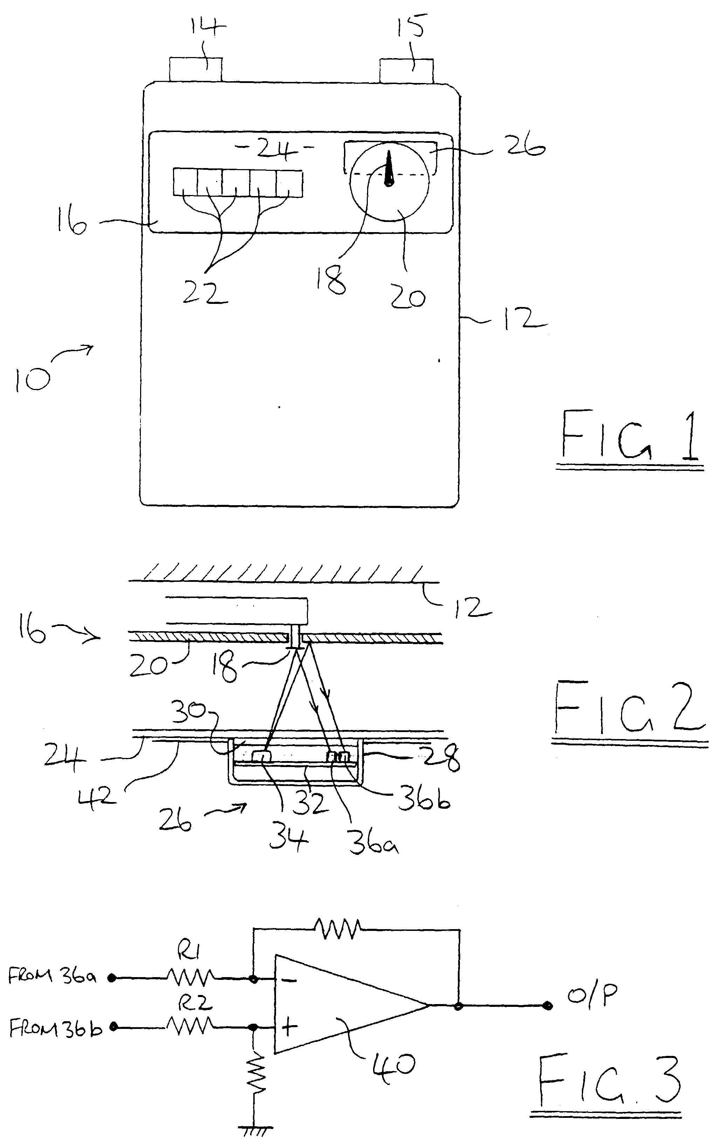

Figure 1 shows at 10 a conventional positive displacement domestic gas meter of the kind available in the United Kingdom under the designation U6, the meter comprising a housing 12 having an inlet 14 and an outlet 15 for the gas to be metered. The positive displacement metering mechanism of the meter 10, which does not form part of the present invention, is arranged in known manner to drive an indicator mechanism 16 of known form. The indicator mechanism 16 includes a red pointer 18 which rotates against a white dial face 20, and which typically executes one complete revolution for each cubic foot of gas metered by the meter 10. The mechanism 16 further comprises a plurality of geared-together indicator or index wheels 22, which are driven via the same shaft that drives the pointer 18 and which together indicate the total volume of gas metered by the meter in cubic feet. The indicator mechanism 16 typically projects forwardly from the front of the upper half of the housing 12 of the meter 10, and is sealed by a transparent window 24 through which the index wheels 22 and the pointer 18 can be viewed.

Secured to the outside of the window 24, in alignment with the upper half of the area on the dial face 20 swept by the pointer 18, is an output device 26 in accordance with the present invention. The device 26 can be secured to the window 24 by any convenient means, for example a suitable adhesive or a clamping device which grips part of the outside of the indicator mechanism 16 and/or the housing 12 of the meter 10.

Typically, the device 26 is associated with or forms part of a remote meter reading system of the kind involving a radio transmitter for transmitting the readings of the meter 10 (derived by counting the pulses from the device 26) to a fixed radio receiver common to a large number of meters or to a radio receiver in a passing meter-reading van. Alternatively, the device 26 can be used to drive a remote indicator device, eg one which is readable from outside the premises in which the meter 10 is installed. However, since the intended use of the device 26 does not form part of the present invention, such use will not be described further.

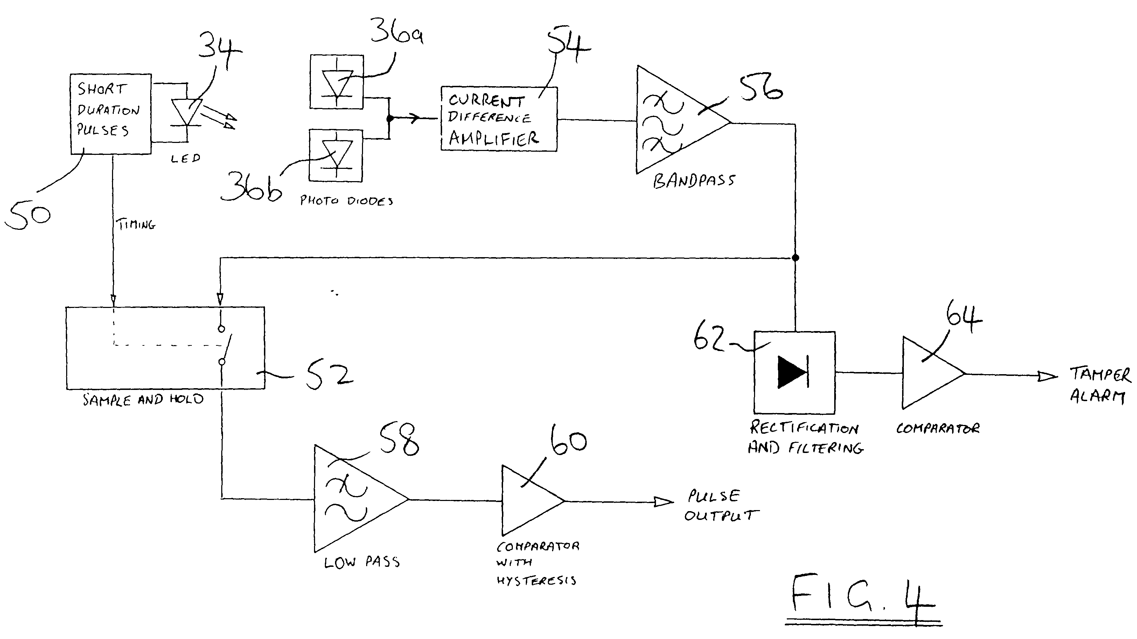

As best seen in Figure 2, the device 26 comprises a generally rectangular sealed housing 28, having a window 30 which faces the window 24. Within the housing 28, a printed circuit board (PCB) 32 is mounted generally parallel to the window 30. The PCB 32 carries a light emitting diode 34 at its leftmost end (as viewed in Figure 2), a pair of closely-spaced matched photodetectors 36a and 36b at its rightmost end, and circuitry (not shown) for energising the diode 34 and processing the output of the photodetectors 36a, 36b.

The diode 34 conveniently operates in the infra red region of the spectrum, typically emitting infra red light centred on a wavelength of about 900 nanometres, and the window 30 of the device 28 therefore needs to be transparent at at least this wavelength, as does the window 24. Where adhesive is used to secure the device 26 to the window 24, it must either be transparent to this infra-red radiation, or be used only around the periphery of the window 30.

The diode 34 is typically mounted beneath a protective mask (not shown), which serves to direct a beam of infra-red light from the diode through the windows 30 and 24 towards the dial face 20 of the indicator mechanism 16, so as to be incident on the dial face in the area thereof swept by the pointer 18: typically, if the area swept by pointer 18 is equated to a clock face, the beam is arranged to be incident on it at the 12 o'clock position, just below the point where the tip of the pointer passes. The dial face 20 reflects this beam, and the photodetectors 36a, 36b are positioned to receive the reflected beam via the windows 24 and 30 and the aforementioned protective mask, which also serves to limit the field of view of the photodetectors to the direction from which the reflected beam is arriving.

The pointer 28 and the dial face 20 do not reflect the beam onto the photodetectors 36a, 36b quite as well as each other : thus even though the pointer 28 may be nearly as reflective as the dial face 20, it tends to scatter that part of the beam incident on it more than the dial faces does. So as the pointer 28 rotates clockwise through the aforementioned 12 o'clock position, it effectively partially interrupts first the portion of the beam that is reflected onto the left photodetector 36a and then the portion of the beam that is reflected onto the right photodetector 36b, the spacing of the photodetectors 36a, 36b and the dimensions of the device 26 typically being selected such that the photodetector 36a to becomes fully illuminated again as the photodetector 36b starts to have its illumination partially interrupted.

The respective outputs of the photodetectors 36a, 36b are connected via respective resistors R1 and R2 to the inverting and non-inverting inputs respectively of a differential amplifier 40, as shown in Figure 3. The output of the amplifier 40, constitutes the output of the device 26.

Although the photodetectors 36a, 36 are matched, typically by forming both of them simultaneously on a common semiconductor substrate, their outputs under the same illumination conditions are still likely to differ slightly, so the values of either the resistors used to bias the photodetectors or the resistors R1 and R2 are selected to be sufficiently different to ensure that the output of the amplifier 40 is biassed low when both detectors are equally illuminated by the diode 34.

As soon as the output of the photodetector 36a starts to fall to any significant extent because of the partial interruption of the beam from the diode 34 by the pointer 18, the output of the amplifier switches high, and remains high until the pointer 18 brings the output of the photodetector 36b below that of the photodetector 36a (ie when the latter is rising again, simultaneously with the former starting to fall). The output of the device 26 thus consists of a single relatively narrow positive-going pulse, which is produced each time the pointer 18 passes through its 12 o'clock position.

It will be appreciated that the use of the matched pair of photodetectors 36a, 36b significantly reduces problems due to temperature, aging and changes in ambient lighting conditions, since all these factors are likely to affect both photodetectors equally, and their effects are therefore cancelled out by the use of the differential amplifier 40. Ambient lighting effects are reduced still further by the use of infra-red light for the beam which is modulated by the pointer 28. They can be reduced even more by providing the window 24 with an infra-red blocking filter over its entire area except for the area contacted by the device 28: such a filter is indicated at 42 in Figure 2.

Many modifications can be made to the described embodiment of the invention. For example, the dial face 20 can be provided with an area of high reflectivity (ie a mirror-like area) at a point along the line defining the aforementioned 12 o'clock position of the pointer 18, to effectively increase the degree of modulation of the beam produced by the pointer 18.

Additionally, the housing 28 need not be rectangular, and indeed can be omitted altogether when the device 26 forms part of a larger device, such as a radio transmitter, having its own housing. Furthermore, the relative positions of the diode 34 and the photodetectors 36a, 36b with respect to each other and with respect to the pointer 18 can be varied considerably, as long as both photodetectors receive substantially the same unmodulated beam, eg reflected from closely adjacent and/or similar portions of the dial face 20, and the pointer 18 modulates the portion of the beam incident on at least one of the photodetectors. Thus the photodetectors 36a, 36b can be disposed one above the other, instead of side-by-side, with the upper one positioned to receive its portion of the reflected beam from a point just above the tip of the pointer 18 when the pointer is in the 12 o'clock position, in which case the portion of the beam incident on the upper photodetector would not be modulated by the pointer at all.

However, there are certain additional advantages to the described embodiment of the invention, in which the photodetectors 36a, 36b are arranged to receive the modulated beam sequentially. In particular, their sequentially changing outputs can be used to detect the direction of rotation of the pointer 18, and to produce a fault signal for storage and/or display and/or transmission in the event that reverse rotation is detected. Additionally, the respective changes in their outputs in. response to the beam modulation can be compared, to ensure that both photodetectors are continuing to operate satisfactorily.

The circuitry which energises the light emitting diode 34 and which biasses the photodetectors 36a, 36b and processes their respective outputs can be modified in other ways than to provide the functions described in the preceding paragraph. In particular, the circuitry can be intermittent or pulsed in operation, both to reduce power consumption (since the circuitry is typically battery-powered when the device 28 is being used with a gas meter or water meter) and to provide increased security (ie resistance to tampering). The frequency of the intermittent or pulsed operation must be such that at the maximum metering (ie gas flow) rate of the meter 10, the pointer 18 cannot completely pass through the area of the dial face 20 from which the beam is being reflected in the time interval between successive energisations of the circuitry. Once the pointer 18 is detected, the frequency of operation of the circuitry can be temporarily and briefly increased to confirm detection, then reduced until the pointer moves beyond the beam reflection area on the dial face 20.

A circuit for producing both pulsed operation of the light emitting diode 34 and increased tamper resistance and detection, along the lines described in the preceding paragraph, is shown in Figure 4.

Thus the circuit of Figure 4 comprises an oscillator 50 which produces short-duration output pulses, typically at about 50kHz, for energising the diode 34, these same pulses also being applied to the sampling control input of a sample-and-hold circuit 52. The photodetectors 36a, 36b are connected together such that the respective currents caused to flow in them by light incident on them oppose each other, and the resulting current difference, representative of the difference in the respective amounts of light falling on the photodetectors, is applied to an amplifier 54.

The output of the amplifier 54 is connected via a bandpass filter 56 centred on 50 kHz to the sampling input of the sample-and-circuit 52, which thus samples the amplified difference between the respective currents produced by the photodetectors 36a, 36b in the brief instants that the light emitting diode is energised. This difference will normally be negligibly small, except when the light incident on one of the photodetectors 36a, 36b is being modulated by the pointer 18, when the circuit 52 will start producing an output which will progressively increase as modulation by the pointer increases. The output of the sample-and-hold circuit 52 is applied via a low pass filter 58, which reduces the 50 kHz ripple present in it, to a comparator 60, which is triggered to produce an output signal constituting the output of the device 26 when the output of the sample-and-hold circuit reaches a predetermined level. The comparator 60 is provided with hysteresis sufficient to ensure that it triggers only once as the output of the sample-and-hold circuit 52 increases, to prevent spurious triggering in the event there is slight jitter on the movement of the pointer 18.

The output of the bandpass filter 56 is connected to a rectification and filtering circuit 62, whose output is connected to a comparator 64. The threshold of the comparator 64 is selected such that the comparator will not be triggered by the output of the circuit 62 in response to the maximum 50 kHz signal normally produced at the output of the filter 56 in response to modulation produced by the pointer 18. However, AC signals of greater amplitude than this normal maximum 50 kHz signal, which AC signals are indicative of a possible attempt to tamper with the operation of the device 26, do trigger the comparator 64, causing it to produce a tamper alarm signal for storing and/or transmission.

A modification which can be made to the embodiment of the invention described with reference to Figure 4 is to modulate the beam produced by the light emitting diode 34 with a predetermined, periodic signal other than a 50 kHz signal, for example a periodically repeated chirp signal or a periodically repeated pseudo-random signal.

Yet another possible modification to the described embodiments of the invention would be to make the pointer 18 reflective, and the dial face 20 behind it non-reflective. However, in general, since the device 26 is mainly intended to be retro-fittable to existing gas meters, the pointer 18 and dial face 20 typically have to be catered for as they are, regardless of which is more reflective and/or scattering.

## Claims

1. An output device for a commodity meter of the kind having a rotary indicator member which rotates in dependence upon the amount of the commodity metered by the meter, the device comprising a housing (28) adapted to be secured to the meter and containing a light emitting device (34) arranged to direct a light beam towards the indicator member for modulation by the indicator member as it rotates and reflection back into the device, detector means (36a, 36b) for detecting the reflected light beam, the detector means comprising a pair of matched semiconductor photodetectors (36a, 36b) positioned such that when the indicator member is modulating the portion of the beam incident on the first photodetector (36a), it is not modulating the portion of the beam incident on the second photodetector (36b) to the same extent, and means (52, 54, 56, 58, 60) for producing an output signal representative of the difference between the respective outputs of the photodetectors, whereby the beam is modulated with a predetermined periodic signal, characterised in that the output signal producing means (52, 54, 56, 58, 60) includes a sample-and-hold circuit (52) arranged to sample the difference between the respective outputs of the photodetectors (36a, 36b) in synchronism with said predetermined periodic signal.

2. An output device as claimed in claim 1, wherein the photodetectors (36a, 36b) are disposed such that the modulation produced by the indicator member affects them in close succession.

3. An output device as claimed in claim 1 or claim 2, wherein both photodetectors (36a, 36b) are formed on a common substrate.

4. An output device as claimed in any preceding claim, wherein the light emitting device (34) is a light emitting diode.

5. An output device as claimed in any preceding claim, wherein the photodetectors (36a, 36b) are connected together such that the respective currents caused to flow in them by the beam oppose each other, whereby the photodetectors together produce an output current representative of the difference between the respective amounts of light falling on them.

6. An output device as claimed in any preceding claim, wherein the output signal producing means (52, 54, 56, 58, 60) further includes means (62, 64) for detecting an AC component above a predetermined amplitude level in the difference between the respective outputs of the photodetectors (36a, 36b) and for producing an alarm signal representative of such detection.

7. An output device as claimed in any preceding claim, wherein the light beam is an infra-red light beam.

8. An output device as claimed in claim 7, wherein the photodetectors (36a, 36b) are preferentially sensitive to infra-red light.

9. A commodity meter provided with an output device (26) in accordance with any of claims 1 to 8.

10. A commodity meter provided with an output device (26) in accordance with claim 7 or claim 8, wherein the indicator member (18) forms part of a transparent fronted indicator mechanism (16), and the transparent front (24) of the indicator mechanism is provided with an infra-red blocking filter (42) over the entire surface thereof except for the portion to which the output device (26) is secured.

11. A commodity meter as claimed in claim 9 or claim 10, wherein the indicator member (18) is a rotary pointer which rotates in front of a dial face (20), and which changes the proportion of the beam reflected onto them or each photodetector (36a, 36b) as it passes through the beam.

## Patentansprüche

1. Ausgabeeinrichtung für ein Verbrauchsmeßgerät mit einem Drehanzeigebauteil, das sich in Abhängigkeit von der Menge des von dem Meßgerät gemessenen Verbrauchs dreht, wobei die Einrichtung ein Gehäuse (28), das zur Befestigung an dem Meßgerät geeignet ist und das eine lichtemittierende Einrichtung (34) aufweist, die angeordnet ist, einen Lichtstrahl auf das Anzeigebauteil zur Modulation durch das Anzeigebauteil, während sich dieses dreht, und zur Rückreflexion in die Einrichtung zu richten, Detektormittel (36a, 36b) zum Nachweis des reflektierten Lichtstrahls, wobei die Detektormittel ein Paar abgeglichener Halbleiter-Photodetektoren (36a, 36b) aufweisen, die so angeordnet sind, daß dann, wenn das Anzeigebauteil den Anteil des Strahls, der auf den ersten Photodetektor (36a) fällt, moduliert, dieses den Anteil des Strahls, der auf den zweiten Photodetektor (36b) fällt, nicht im selben Ausmaß moduliert, und Mittel (52, 54, 56, 58, 60) aufweist, um ein Ausgangssignal zu erzeugen, das die Differenz zwischen den jeweiligen Ausgangssignalen der Photodetektoren repräsentiert, dadurch gekennzeichnet, daß der Strahl mit einem vorbestimmten periodischen Signal moduliert wird und die Mittel zur Erzeugung des Ausgangssignals (52, 54, 56, 58, 60) eine Abtast-Halte-Schaltung (52) aufweisen, die so angeordnet ist, daß sie die Differenz zwischen den jeweiligen Ausgangssignalen der Photodetektoren (36a, 36b) synchron mit dem vorbestimmten periodischen Signal abtastet.

2. Ausgabeeinrichtung nach Anspruch 1, worin die Photodetektoren (36a, 36b) so angeordnet sind, daß die durch das Anzeigebauteil erzeugte Modulation diese dicht hintereinander beeinflußt.

3. Ausgabeeinrichtung nach Anspruch 1 oder Anspruch 2, worin beide Photodetektoren (36a, 36b) auf einem gemeinsamen Substrat ausgebildet sind.

4. Ausgabeeinrichtung nach einem der vorstehenden Ansprüche, worin die lichtemittierende Einrichtung (34) eine lichtemittierende Diode ist.

5. Ausgabeeinrichtung nach einem der vorstehenden Ansprüche, worin die Photodetektoren (36a, 36b) so miteinander verbunden sind, daß die jeweiligen Ströme, die infolge des Strahls in diesen fließen, einander entgegengesetzt sind, wobei die Photodetektoren gemeinsam einen Ausgangsstrom erzeugen, der die Differenz zwischen den jeweiligen Lichtmengen, die auf diese fallen, repräsentiert.

6. Ausgabeeinrichtung nach einem der vorstehenden Ansprüche, worin die Mittel zur Erzeugung des Ausgangssignals (52, 54, 56, 58, 60) weiter Mittel (62, 64) aufweisen, um eine Wechselstromkomponente in der Differenz zwischen den jeweiligen Ausgangssignalen der Photodetektoren (36a, 36b) oberhalb eines vorbestimmten Amplitudenniveaus nachzuweisen und um ein Alarmsignal, das einen solchen Nachweis repräsentiert, zu erzeugen.

7. Ausgabeeinrichtung nach einem der vorstehenden Ansprüche, worin der Lichtstrahl ein Infrarotlichtstrahl ist.

8. Ausgabeeinrichtung nach Anspruch 7, wobei die Photodetektoren (36a, 36b) vorzugsweise für Infrarotlicht empfindlich sind.

9. Verbrauchsmeßgerät, das mit einer Ausgabeeinrichtung (26) nach einem der Ansprüche 1 bis 8 versehen ist.

10. Verbrauchsmeßgerät, das mit einer Ausgabeeinrichtung (26) nach Anspruch 7 oder Anspruch 8 versehen ist, worin das Anzeigebauteil (18) einen Teil eines mit einer transparenten Front versehenen Anzeigemechanismus (16) bildet und die transparente Front (24) des Anzeigemechanismus auf ihrer gesamten Oberfläche mit Ausnahme des Abschnitts, auf dem die Ausgabeeinrichtung (26) befestigt ist, mit einem Infrarotsperrfilter (42) versehen ist.

11. Verbrauchsmeßgerät nach Anspruch 9 oder Anspruch 10, worin das Anzeigebauteil (18) ein Drehzeiger ist, der sich vor einem Ziffernblatt (20) dreht und der den Anteil des Lichtstrahls ändert, der auf beide oder jeden Photodetektor (36a, 36b) reflektiert wird, während er durch den Strahl läuft.

## Revendications

1. Dispositif de sortie pour un compteur de produit du type comprenant un élément indicateur rotatif qui tourne en fonction de la quantité de produit mesurée par le compteur, le dispositif comprenant un boîtier (28) conçu pour être fixé sur le compteur et contenant un dispositif émetteur de lumière (34) agencé pour diriger un faisceau lumineux vers l'élément indicateur afin que le faisceau lumineux soit modulé par l'élément indicateur pendant la rotation de ce dernier et réfléchi dans le dispositif, un moyen détecteur (36a, 36b) pour détecter le faisceau lumineux réfléchi, le moyen détecteur comprenant deux photodétecteurs semi-conducteurs appariés (36a, 36b) placés de manière qu'au moment où l'élément indicateur module la portion du faisceau arrivant sur le premier photodétecteur (36a), il ne module pas la portion du faisceau arrivant sur le second photodétecteur (36b) avec la même intensité, et des moyens (52, 54, 56, 58, 60) pour former un signal de sortie représentant la différence entre les sorties respectives des photodétecteurs, dans lequel le faisceau est modulé par un signal périodique prédéterminé, et le moyen formant le signal de sortie (52, 54, 56, 58, 60) comprend un circuit d'échantillonnage et de maintien (52) agencé pour échantillonner la différence entre les sorties respectives des photodétecteurs (36a, 36b) en synchronisme avec ledit signal périodique prédéterminé.

2. Dispositif de sortie selon la revendication 1, dans lequel les photodétecteurs (36a, 36b) sont disposés de manière que la modulation créée par l'élément indicateur les affecte selon une succession immédiate.

3. Dispositif de sortie selon la revendication 1 ou la revendication 2, dans lequel les deux photodétecteurs (36a, 36b) sont formés sur un substrat commun.

4. Dispositif de sortie selon l'une quelconque des revendications précédentes, dans lequel le dispositif émetteur de lumière (34) est une diode électro-luminescente.

5. Dispositif de sortie selon l'une quelconque des revendications précédentes, dans lequel les photodétecteurs (36a, 36b) sont connectés entre eux, de manière que les courants respectifs créés par le faisceau lumineux, traversant ces photodétecteurs soient opposés l'un à l'autre, grâce à quoi les photodétecteurs forment ensemble un courant de sortie représentant la différence entre les quantités respectives de lumière arrivant sur eux.

6. Dispositif de sortie selon l'une quelconque des revendications précédentes, dans lequel le moyen (52, 54, 56, 58, 60) formant le signal de sortie comprend encore un moyen (62, 64) pour détecter une composante alternative ayant un niveau d'amplitude prédéterminé dans la différence entre les sorties respectives des photodétecteurs (36a, 36b) et pour former un signal d'alarme représentatif de cette détection.

7. Dispositif de sortie selon l'une quelconque des revendications précédentes, dans lequel le faisceau lumineux est un faisceau lumineux infrarouge.

8. Dispositif de sortie selon la revendication 7, dans lequel les photodétecteurs (36a, 36b) sont de préférence sensibles à la lumière infrarouge.

9. Compteur de produit équipé d'un dispositif de sortie (26) selon l'une quelconque des revendications 1 à 8.

10. Compteur de produit équipé d'un dispositif de sortie (26) selon la revendication 7 ou la revendication 8, dans lequel l'élément indicateur (18) fait partie d'un mécanisme indicateur à partie frontale transparente (16), et la partie frontale transparente (24) du mécanisme indicateur comporte un filtre (42) bloquant les rayons infrarouges sur toute sa surface sauf dans la portion à laquelle le dispositif de sortie (26) est fixé.

11. Compteur de produit selon la revendication 9 ou la revendication 10, dans lequel l'élément indicateur (18) est une aiguille rotative qui tourne devant la face d'un cadran (20), et qui modifie la proportion du faisceau réfléchi sur les photodétecteurs (36a, 36b) quand elle traverse le faisceau.
